# EUROPEAN PATENT APPLICATION

(11) **EP 3 836 379 A1**
(43) Date of publication of application: **16.06.2021**
(21) Application number: 20212985.4
(22) Date of filing: 10.12.2020
(51) Int. Cl.: H02M 3/335, H02M 1/00

(54) **FLYBACK SWITCHING POWER SUPPLY**

(30) Priority: 10.12.2019 CN 201911255833
(71) Applicant: Globe (Jiangsu) Co., Ltd., Zhonglou District Changzhou, Jiangsu 213023 (CN)
(72) Inventor: ZHU, Yanqiang, Chang Zhou, Jiangsu 213023 (CN)
(74) Representative: Bergenstråhle & Partners AB

(57) **Abstract**

The invention discloses a flyback switching power supply, comprising a power input and rectifying circuit (100); a DC-DC switching circuit (200), the DC-DC switching circuit (200) comprising a PWM controller (U1); and a voltage and current feedback circuit (400). The PWM controller (U1) comprises a chip working frequency setting pin (4) for setting a working frequency of the PWM controller (U1), the flyback switching power supply further comprises a frequency adjustment circuit (500) connected between the chip working frequency setting pin (4) of the PWM controller (U1) and the voltage and current feedback circuit (400), and the frequency adjustment circuit (500) is configured to decrease the working frequency when the flyback switching power supply is under a low load condition, and increase the working frequency when the flyback switching power supply is under a high load condition.

## Description

### Technical Field

The present disclosure relates to a control circuit, particularly to a control circuit of a flyback switching power supply.

### Background Art

In the manufacture of electrical equipment, compared to traditional transformer step-down linear power supplies, switching power supplies have the advantages of small size, light weight, high efficiency, and energy saving. The power supply can be adapted to AC power supply or DC power supply and has a wide range of supply voltages. As a result, switching power supplies are becoming more and more widely used.

At present, most of the low-power switching power supplies on the market use flyback switching power supplies. When used in a variety of different situations, the existing flyback switching power supply cannot change the working frequency according to the working environment or scene, which may cause temperature rise of some power devices. Especially when working at high environment temperatures, this may result in product losses.

In view of the above, there is a need to provide an improved flyback switching power supply to solve the problem.

### Summary of Invention

One objective of the present disclosure is to provide a flyback switching power supply, which can be adapted to different working environments, and the working frequency thereof can be switched in real time according to the working environment.

In order to achieve the above object, the present disclosure provides a flyback switching power supply, comprising a power input and rectifying circuit; a DC-DC switching circuit, the DC-DC switching circuit comprising a Pulse Width Modulation, PWM, control integrated circuit, hereinafter PWM controller; and a voltage and current feedback circuit. The PWM controller comprises a chip working frequency setting pin for setting a working frequency of the PWM controller, the flyback switching power supply further comprises a frequency adjustment circuit connected between the chip working frequency setting pin of the PWM controller and the voltage and current feedback circuit, and the frequency adjustment circuit is configured to decrease the working frequency when the flyback switching power supply is under a low load condition, and increase the working frequency when the flyback switching power supply is under a high load condition.

In one embodiment, the frequency adjustment circuit comprises a primary side module and a secondary side module, the primary side module comprises a first resistor and a light-receiving device of a first optical coupler, and the secondary side module comprises a light-emitting device of the first optical coupler.

In one embodiment, one end of the first resistor is connected to the chip working frequency setting pin and the other end of the first resistor is connected to a collector of the light-receiving device of the first optical coupler.

In one embodiment, the secondary side module comprises a second resistor, a first diode, an operational amplifier, a third resistor, a fourth resistor, a fifth resistor, a sixth resistor, and a second diode; the cathode of the light-emitting device of the first optical coupler is grounded, and the anode is connected to one end of the second resistor; the other end of the second resistor is connected to the cathode of the first diode, and the anode of the first diode is respectively connected to the anode of a second diode, one end of the fourth resistor and an output pin of the operational amplifier; the out-of-phase input pin of the operational amplifier is connected to the fourth resistor and the third resistor, and the in-phase input pin is grounded through the fifth resistor; the other end of the third resistor is grounded, and the sixth resistor is connected between the third resistor and the fifth resistor.

In one embodiment, the flyback switching power supply further comprises an FB signal feedback module connected between an FB pin of the PWM controller and the voltage and current feedback circuit.

In one embodiment, the FB signal feedback module comprises a second optical coupler, a resistor and a second diode; and the second optical coupler comprises a light-emitting device and a light-receiving device.

In one embodiment, a cathode of the light-emitting device is connected respectively with the third resistor and the sixth resistor and being grounded, an anode of the light-emitting device is connected to an eighth resistor; the other end of the eighth resistor is connected to a ninth resistor and the other end of the ninth resistor is connected to a negative electrode of the second diode.

In one embodiment, an emitter of the light-receiving device of the second optical coupler is connected to an emitter of the light-receiving device of the first optical coupler, and a collector thereof is connected to the FB pin of the PWM controller.

In one embodiment, the second optical coupler and the capacitor are connected in parallel between the FB pin and the chip working frequency setting pin of the PWM controller.

In one embodiment, the flyback switching power supply comprises a tenth resistor connected to the chip working frequency setting pin of the PWM controller, and the frequency adjustment circuit comprises a first resistor connected in parallel with the tenth resistor to form a frequency setting resistor of the PWM controller.

In one embodiment, the frequency adjustment circuit comprises a first optical coupler configured as: when the flyback switching power supply is under a high load condition, a light-emitting device of the first optical coupler is on, a light-receiving device of the first optical coupler is turned on, so that the first resistor in the frequency adjustment circuit is enabled.

In one embodiment, the frequency adjustment circuit comprises a first optical coupler configured as: when the flyback switching power supply is under a low load condition, a light-emitting device of the first optical coupler is off, a light-receiving device of the first optical coupler is off, so that the first resistor in the frequency adjustment circuit is not enabled.

In one embodiment, the flyback switching power supply further comprises an FB signal feedback module connected to FB pin of the PWM controller, and wherein the FB signal feedback module comprises a second optical coupler connected in parallel with the tenth resistor and at least one eighth resistor.

The beneficial effects of the present disclosure are: after the frequency adjustment circuit is introduced into the flyback switching power supply of the present disclosure, it can work in a variable frequency state. Working at low frequency under low load condition makes the flyback switching power supply more energy-saving; and working at high frequency under a high load condition makes the temperature rise of the flyback switching power supply is reduced and the output capability is improved. Therefore, the applicable occasions of the flyback switching power supply of the present disclosure become more extensive and the product is reliable.

The above general description and the following detailed description are intended to be illustrative and not restrictive.

### Brief Description of Drawings

FIG. 1 is an operation diagram of a flyback switching power supply according to the present disclosure.
FIG. 2 is a circuit diagram of the flyback switching power supply shown in FIG. 1.

### Description of Embodiments

Exemplary embodiments will be described in detail herein, and the embodiments are illustrated in the accompanying drawings. When the following description refers to the drawings, unless otherwise indicated, the same numbers in different drawings indicate the same or similar elements. The embodiments described in the following do not represent all embodiments consistent with present disclosure. On the contrary, they are only examples of devices, systems, machines, and methods consistent with some aspects of the invention as detailed in the appended claims.

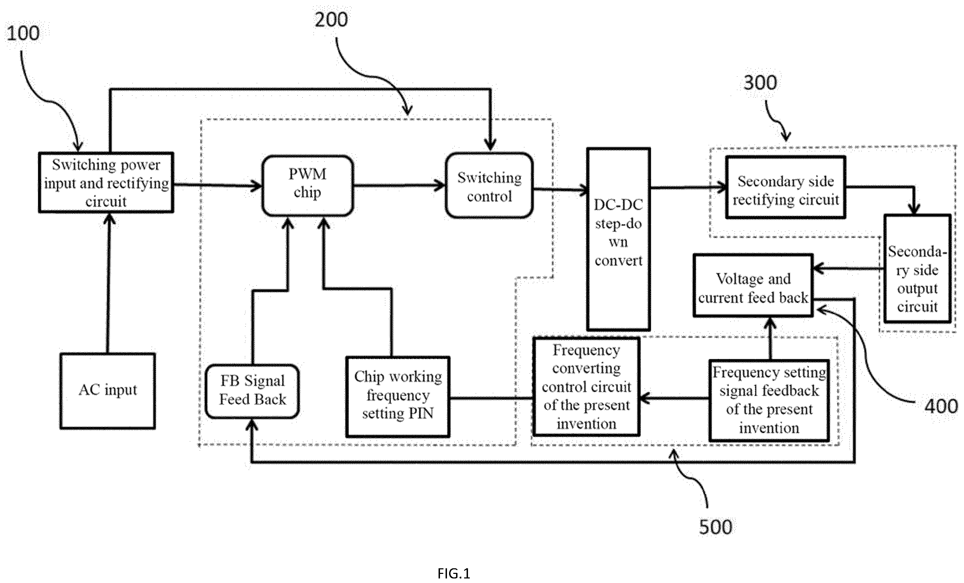

Referring to FIG. 1, the present disclosure discloses a flyback switching power supply, comprising a switching power input and rectifying circuit 100, a DC-DC switching circuit 200, a secondary rectifying and output circuit 300, a voltage and current feedback circuit 400, and a frequency adjustment circuit 500. The DC-DC switching circuit 200 comprises a PWM controller U1. The PWM controller U1 comprises the following pins, GND, FB, Vin, RI, RT, Sense, VDD, and Gate. The frequency adjustment circuit 500 is connected between the FB and RI pins, for changing the working frequency of the flyback switching power supply according to the working state of the flyback switching power supply. When the load of the flyback switching power supply is low, the frequency adjustment circuit 500 will decrease the working frequency; when the load of the flyback switching power supply is high, the frequency adjustment circuit 500 will increase the working frequency. The circuit is described in detail below.

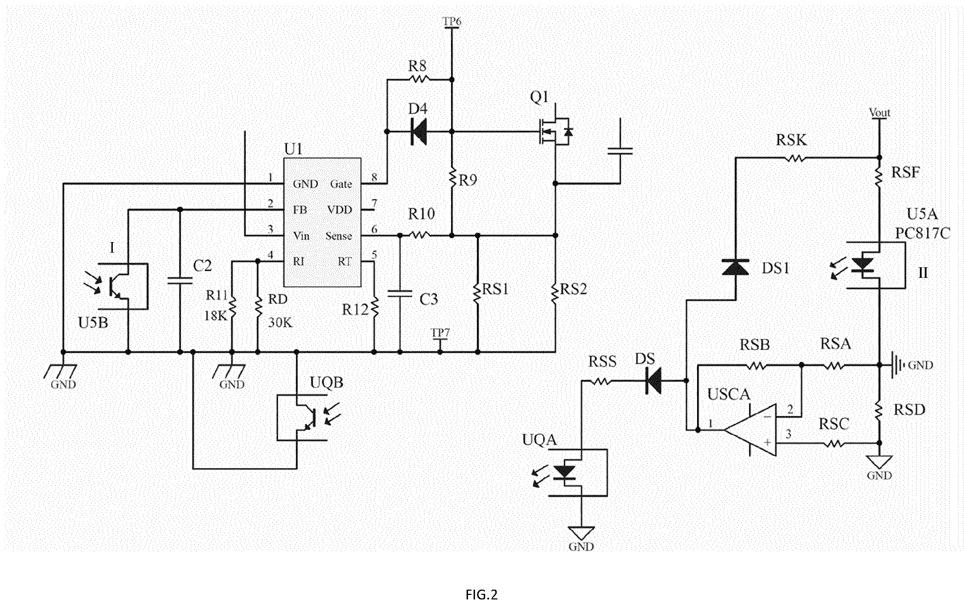

Referring to FIG. 2, pin 1, i.e. the GND pin, of the PWM controller U1 is grounded. Pin 2, i.e. the FB pin, of the PWM controller U1 is connected to the voltage and current feedback circuit 400. The voltage and current feedback circuit 400 comprises a capacitor C2 and an optical coupler I connected in parallel. The other end of the capacitor C2 is connected to a resistor R11 and then connected to pin 4, i.e. the RI pin of the PWM controller U1. Pin 5, i.e. the RT pin, of the PWM controller U1 is connected to a resistor R12, and the other end of the resistor R12 is connected to the resistor R11. The resistor R12 and a capacitor C3 are arranged in parallel between the RT pin of the PWM controller U1 and pin 6, i.e. the Sense pin. The end of the capacitor C3 connected to the Sense pin is also connected to one end of a resistor R10. The other end of the resistor R10 is connected to a resistor R9, a resistor RS1, and a resistor RS2. The other end of the resistor R9 is connected to pin 8 of the PWM controller U1, i.e. the Gate pin, through a resistor R8. A diode D4 is also connected in parallel between the Gate pin and the resistor R9. The resistor RS1 and the resistor RS2 are connected in parallel between the resistor R10 and the capacitor C3. Generally, the working frequency of the flyback switching power supply can be determined by adjusting the resistance value of the resistor R11, but the resistance value is unchangeable once it is determined. The introduction of the frequency adjustment circuit 500 of the present disclosure solves this problem.

The frequency adjustment circuit 500 comprises a primary side module and a secondary side module. The primary side module comprises a resistor RD and a light receiving device UQB of the optical coupler I. One end of the resistor RD is connected to the RI pin and the other end is connected to a collector of the light receiving device UQB of the optical coupler I. The secondary side module comprises a light-emitting device UQA of the optical coupler I, a resistor RSS, a diode DS, an operational amplifier USC, a resistor RSA, a resistor RSB, a resistor RSC, a resistor RSD, and a diode DS1. A cathode of the light-emitting device UQA of the optical coupler I is grounded, and an anode is connected to the resistor RSS. The light-emitting device UQA and the light receiving device UQB constitute a complete optical coupler I. The other end of the resistor RSS is connected to a cathode of the diode DS, and an anode of the diode DS is respectively connected to an anode of the diode DS1, one end of the resistor RSB, and the output pin 1 of the operational amplifier USC. An out-of-phase input pin 2 of the operational amplifier USC is connected to the resistor RSB and the resistor RSA, and an in-phase input pin 3 is grounded through the resistor RSC. The other end of the resistor RSA is grounded, and the resistor RSD is arranged between the resistor RSA and the resistor RSC. The resistor RSA is also connected to an cathode of a light-emitting device U5A of an optical coupler II, an anode of the light-emitting device U5A of the optical coupler II is connected to the resistor RSF. The other end of the resistor RSF is connected to the resistor RSK, and the other end of the resistor RSK is connected to a negative electrode of the diode DS1. The light-emitting device U5A of the optical coupler II, the resistor RSF, the resistor RSK, and the diode DS1 together constitute a signal multiplexing circuit, which is used to control the output of no-load voltage and constant current. The light-emitting device U5A and a light-receiving device U5B are combined into a complete optical coupler II.

In operation, according to the output current, a changing level signal can be output at pin 1 of the operational amplifier USC in the secondary side module, and the amplified level signal drives the light-emitting device UQA of the optical coupler I. When current passes through the light-emitting device UQA of the optical coupler I, the light receiving device UQB of the optical coupler I is turned on, so that the resistor RD is applied in the frequency adjustment circuit 500. In other words, the resistor RD and the original resistor R11 together form a frequency adjustment resistor, which is used to change the level of the RI pin of the PWM controller U1 and change the parameters of the RC oscillator circuit inside the chip, so as to adjust the working frequency. In the signal multiplexing circuit, the output signal of the pin 1 of the operational amplifier USC is multiplexed through the diode DS1, thereby leading to the no-load voltage output and constant current output. The circuit design and system does not require any additional comparators or operational amplifiers.

In a preferred embodiment, at least one of optical coupler I and optical coupler II in the circuit are realized as a highspeed optical coupler.

In a preferred embodiment, the change of the circuit working frequency is controlled within 20% of the recommended working frequency of the main control chip, so that the circuit can work stable.

As can be seen from the above description, the frequency adjustment circuit 500 is configured to: when the output current of the flyback switching power supply changes, by introducing a resistor RD, the resistor RD and the resistor R11 are connected in parallel to form a frequency setting resistor of the PWM controller U1, so as to achieve the purpose of adjusting the working frequency of the flyback switching power supply. At the same time, the frequency adjustment circuit 500 employs the optical coupler I. When there is current passing through the light-emitting device UQA of the optical coupler I, the light-receiving device UQB is on, so that the resistor RD is added to the frequency adjustment circuit 500.

The flyback switching power supply of the present disclosure comprises the frequency adjustment circuit 500, and it can achieve a variable working frequency. When the flyback switching power supply works under low load, 50% load and high load, the frequency adjustment circuit 500 will adjust the flyback switching power supply to be at adaptive frequencies, with a low working frequency under a low load condition and a high working frequency under a high load condition. This setting enables the flyback switching power supply to save more energy under a low load condition, and lower the temperature rise and achieve higher output capacity under a high load condition.

The above embodiments are only used to illustrate the present disclosure and not to limits the technical solutions described in the present disclosure. The understanding of this specification should be based on those skilled in the art, although the present disclosure has been described in detail with reference to the above embodiments. However, those skilled in the art should understand that the technical solutions and improvements of the present disclosure can be modified or equivalently replaced within the scope of the appended claims without departing from the inventive idea.

All the described alternative embodiments above or parts of an embodiment can be freely combined or employed separately from each other without departing from the inventive idea as long as the combination is not contradictory.

## Claims

1. A flyback switching power supply, comprising:
a power input and rectifying circuit (100);
a **D**irect **C**urrent-**D**irect **C**urrent, DC-DC, switching circuit (200), the DC-DC switching circuit (200) comprising a PWM controller (U1); and
a voltage and current feedback circuit (400),
wherein, the PWM controller (U1) comprises a chip working frequency setting pin (4) for setting a working frequency of the PWM controller (U1), the flyback switching power supply further comprises a frequency adjustment circuit (500) connected between the chip working frequency setting pin (4) of the PWM controller (U1) and the voltage and current feedback circuit (400), and the frequency adjustment circuit (500) is configured to decrease the working frequency when the flyback switching power supply is under a low load condition, and increase the working frequency when the flyback switching power supply is under a high load condition.

2. The flyback switching power supply according to claim 1, wherein the frequency adjustment circuit (500) comprises a primary side module and a secondary side module, the primary side module comprises a first resistor (RD) and a light-receiving device (UQB) of a first optical coupler (I), and the secondary side module comprises a light-emitting device (UQA) of the first optical coupler (I).

3. The flyback switching power supply according to claim 2, wherein one end of the first resistor (RD) is connected to the chip working frequency setting pin (4) and the other end of the first resistor (RD) is connected to a collector of the light-receiving device (UQB) of the first optical coupler (I).

4. The flyback switching power supply according to any one of claims 2 or 3, wherein the secondary side module comprises a second resistor (RSS), a first diode (DS), an operational amplifier (USC), a third resistor (RSA), a fourth resistor (RSB), a fifth resistor (RSC), a sixth resistor (RSD), and a second diode (DS1); a cathode of the light-emitting device (UQA) of the first optical coupler (I) is grounded, and an anode is connected to one end of the second resistor (RSS); the other end of the second resistor (RSS) is connected to a cathode of the first diode (DS), and an anode of the first diode (DS) is respectively connected to an anode of the second diode (DS1), one end of the fourth resistor (RSB) and an output pin (1) of the operational amplifier (USC); an out-of-phase input pin (2) of the operational amplifier (USC) is connected to the fourth resistor (RSB) and the third resistor (RSA), and an in-phase input pin (3) is grounded through the fifth resistor (RSC); the other end of the third resistor (RSA) is grounded, and the sixth resistor (RSD) is connected between the third resistor (RSA) and the fifth resistor (RSC).

5. The flyback switching power supply according to any one of claims 1 to 4, wherein the flyback switching power supply further comprises a FeedBack, FB, signal feedback module connected between an FB pin of the PWM controller (U1) and the voltage and current feedback circuit (400).

6. The flyback switching power supply according to claim 5, wherein the FB signal feedback module comprises a second optical coupler (II), at least one resistor (RSF, RSK) and a second diode (DS1); and the second optical coupler (II) comprises a light-emitting device (U5A) and a light-receiving device (U5B).

7. The flyback switching power supply according to claim 6, wherein a cathode of the light-emitting device (U5A) is connected respectively with the third resistor (RSA) and the sixth resistor (RSD) and is grounded, an anode of the light-emitting device (U5A) is connected to an eighth resistor (RSF); the other end of the eighth resistor (RSF) is connected to a ninth resistor (RSK) and the other end of the ninth resistor (RSK) is connected to a negative electrode of the second diode (DS1).

8. The flyback switching power supply according to any one of claims 5 to 7, wherein an emitter of the light-receiving device (U5B) of the second optical coupler (II) is connected to an emitter of the light-receiving device (UQB) of the first optical coupler (I), and a collector thereof is connected to the FB pin of the PWM controller (U1).

9. The flyback switching power supply according to claim 8, wherein the second optical coupler (II) and a capacitor (C2) are connected in parallel between the FB pin and the chip working frequency setting pin (4) of the PWM controller (U1).

10. The flyback switching power supply according to claim 1, wherein the flyback switching power supply comprises a tenth resistor (R11) connected to the chip working frequency setting pin (4) of the PWM controller (U1), and the frequency adjustment circuit (500) comprises a first resistor (RD) connected in parallel with the tenth resistor (R11) to form a frequency setting resistor of the PWM controller (U1).

11. The flyback switching power supply according to claim 10, wherein the frequency adjustment circuit (500) comprises a first optical coupler (I) configured as:
when the flyback switching power supply is under a high load condition, a light-emitting device (UQA) of the first optical coupler (I) is on, a light-receiving device (UQB) of the first optical coupler (I) is turned on, so that the first resistor (RD) in the frequency adjustment circuit (500) is enabled.

12. The flyback switching power supply according to claim 10, wherein the frequency adjustment circuit (500) comprises a first optical coupler (I) configured as: when the flyback switching power supply is under a low load condition, a light-emitting device (UQA) of the optical coupler (I) is off, a light-receiving device (UQB) of the first optical coupler (I) is off, so that the first resistor (RD) in the frequency adjustment circuit is not enabled.

13. The flyback switching power supply according to claim 11, wherein the flyback switching power supply further comprises an FB signal feedback module connected to FB pin of the PWM controller (U1), and wherein the FB signal feedback module comprises a second optical coupler (II) connected in parallel with the tenth resistor (R11) and at least one eighth resistor (RSF).
